# EUROPEAN PATENT APPLICATION

(11) **EP 1 049 042 A1**
(43) Date of publication of application: **02.11.2000**
(21) Application number: 99303314.1
(22) Date of filing: 28.04.1999
(51) Int. Cl.: G06K 17/00

(54) **Storage system**

(71) Applicant: THE PROCTER & GAMBLE COMPANY, Cincinnati, Ohio 45202 (US)
(72) Inventor: Ashton, Kevin John, London SE5 7RL (GB)
(74) Representative: Brunner, Michael John

(57) **Abstract**

A storage system has one or more supports, for example, shelves 1 and, one or more sensors 3 which are arranged to detect the presence of transponders 6 associated with items 7 to be stored on the shelves. Information can thus be from the transponders, and transmitted to, for example, a data processing unit.

## Description

The present invention relates to storage systems and, more particularly, to storage systems of the type used to display items in a supermarket or the like. The term 'storage' is thus used in the context of the present application to mean a system on or in which items may be held temporarily or semi-permanently until moved therefrom, such as display shelving systems in retail outlets and the like, warehouse shelving, etc.

A number of difficulties exist in factories, wholesale outlets, and retail outlets such as supermarkets, in maintaining a stock of items and displaying items for sale to shoppers, etc. In particular in a retail outlet, it is necessary for the stocking of items on the shelves and similar supports to be monitored and, conventionally, this involves personnel carrying out a visual check and/or count in order to ensure that items are always available for purchase. However, this is obviously both time-consuming, prone to error, and expensive in staff costs. Additionally, changes in the pricing of items have to be indicated on the shelf and this again requires staff intervention. In both of these processes, monitoring and price adjustment, mistakes by staff can cause considerable annoyance and additional work.

The present invention is aimed at applying a system which can be used to overcome these problems as well as create additional advantages.

According to the present invention there is provided a storage system comprising one or more supports and, associated with the supports, one or more sensors arranged to detect the presence of transponders associated with items to be stored on the supports, to read information from the transponders, and to transmit information read from the transponders to, for example, a data processing unit.

The storage system may be a shelving system, fo example, a display system as used in retail outlets or the like, or in warehouses etc.

An inventory control system may include a storage system as defined above, together with a data processing unit arranged to receive information the sensor or sensors.

The data processing unit is preferably a computer system programmed to maintain a database of information about individual items for stock control purposes and the like.

In particular, the transponders may comprise RFID or multi-bit magnetic tags which may be attached to or otherwise integrally associated with items to be stored and displayed on the shelves.

By using such a system it is possible to detect or infer the presence, absence and removal of items from a support, eg. a shelf, either in real time or close to real time via continuous or continual intermittent polling.

The system may be used in a number of ways to manage logistics and inventory of items, for example, to analyse the level of stock of items on individual supports such as shelves and, via a computer system, trigger replenishment when the number of items falls below a pre-determined threshold level. The supports may be provided with electronic displays so as to display the prices of items and other information if desired, enabling price changes to be indicated substantially instantaneously. The location and quantity of items can also be checked for compliance with agreed plans and designs and misplaced items may also be readily located by means of such a system.

Accurate data about the off-take of items, for example, how many times an item is picked up and replaced before purchase, the effects of changes in store environment, e.g. signage, position, etc., and the identification of unusual shelf activity, e.g. the removal of large volumes of generally slow-moving items, may all be provided by such a system.

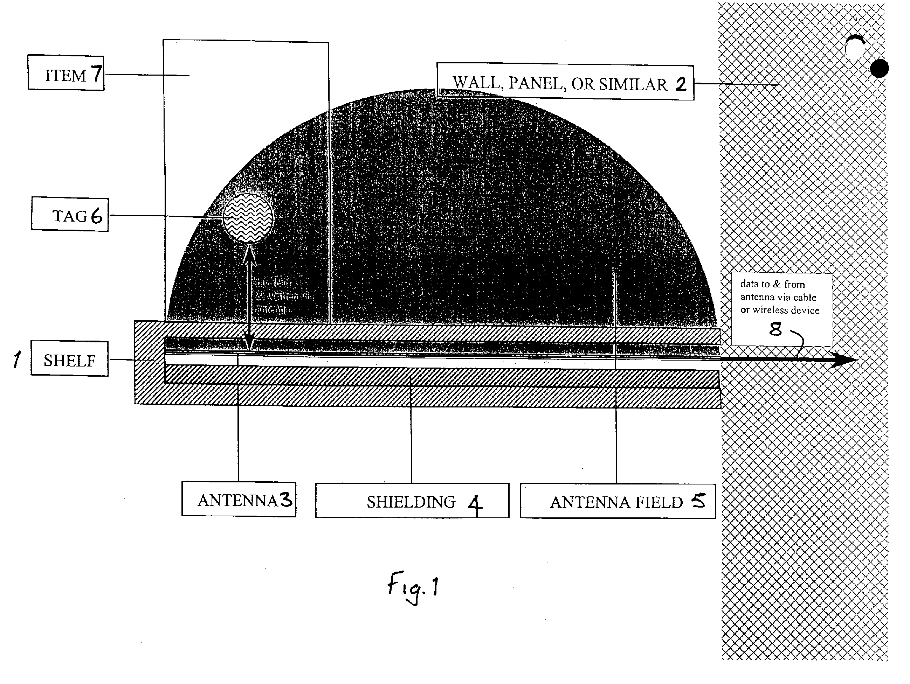

A number of examples of systems according to the present invention will now be described with reference to the accompanying drawings in which Figs. 1 to 5 each provide a diagrammatic cross-sectional view of a stoprage system in the form of a shelving system intended for reading radio frequency ID tags (RFID tags) which may be attached to or embedded in the packaging of individual items displayed for sale.

Fig. 1 illustrates a basic example in which a shelf 1 is supported from a wall panel or the like 2 along its rear edge, the shelf carrying, along its length, one or more antennas 3 which are shielded by appropriate shielding 4 from the shelf below and which, in effect, provide an antenna field 5 for the location and reading of information on RFID tags 6 attached to or embedded within items 7 disposed on the shelf 1. The RFID tags (which are conventional) each consist of an integrated circuit attached to a radio antenna affixed to substrate, and the shelf can send and receive digital data to the receiving antennae of the tags via radio signals at frequencies of the electro-magnetic spectrum including 125khz, 13.56mhz and 2.45ghz.

The or each antenna 3 is connected via a suitable cable 8 or else via wireless transmission to a computerised inventory control system which maintains a database which is updated by information supplied from the RFID tags 6 via the antennas 3.

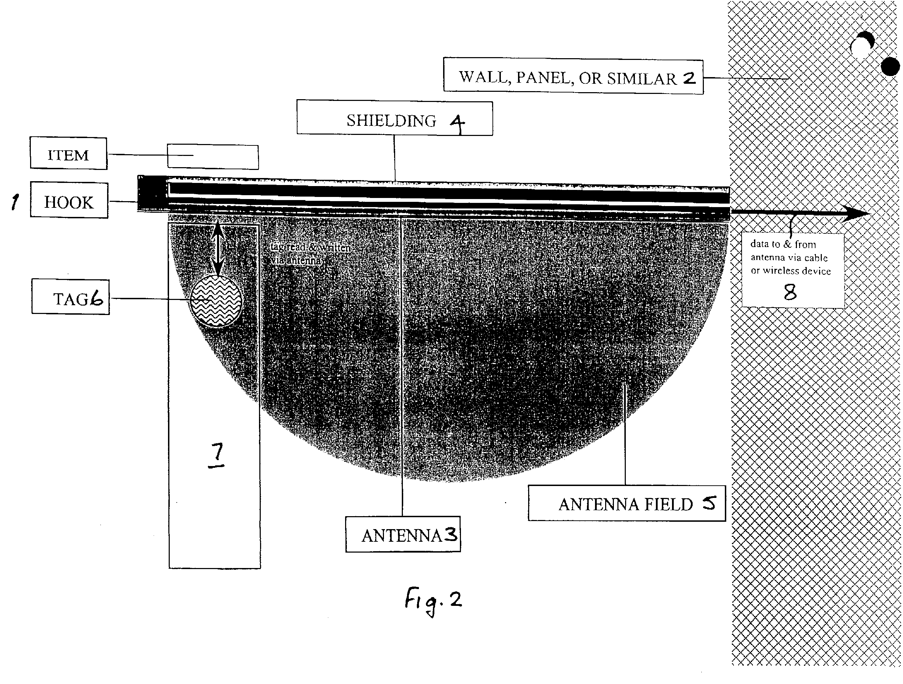

Fig. 2 illustrates a modified design in which items 7 are intended to be slung beneath a shelf 1 which includes a hook or similar device to hold the items. Again, appropriate shielding can be provided for the antenna 3.

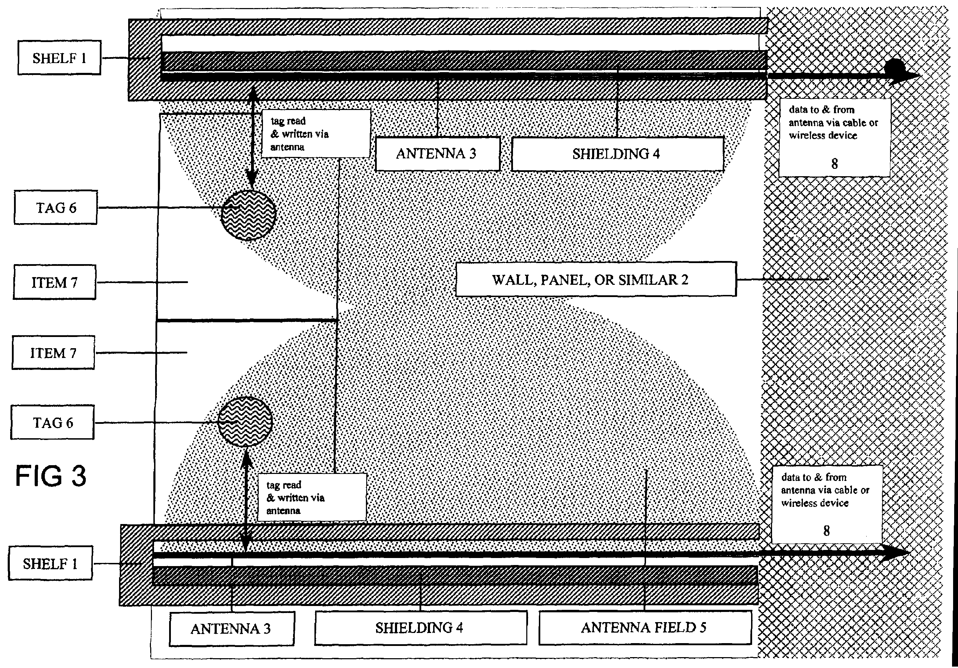

More complex designs may be necessary where items are intended for stacking one on top of another, because individual items may act as shields for the tag reading system by attenuating the radiation, so as to cause some tags to be unread. A more complex design is shown in Fig. 3 in which a pair of antennas are provided, one on the underside of an upper shelf 1 and another on the top of a lower shelf 1'.

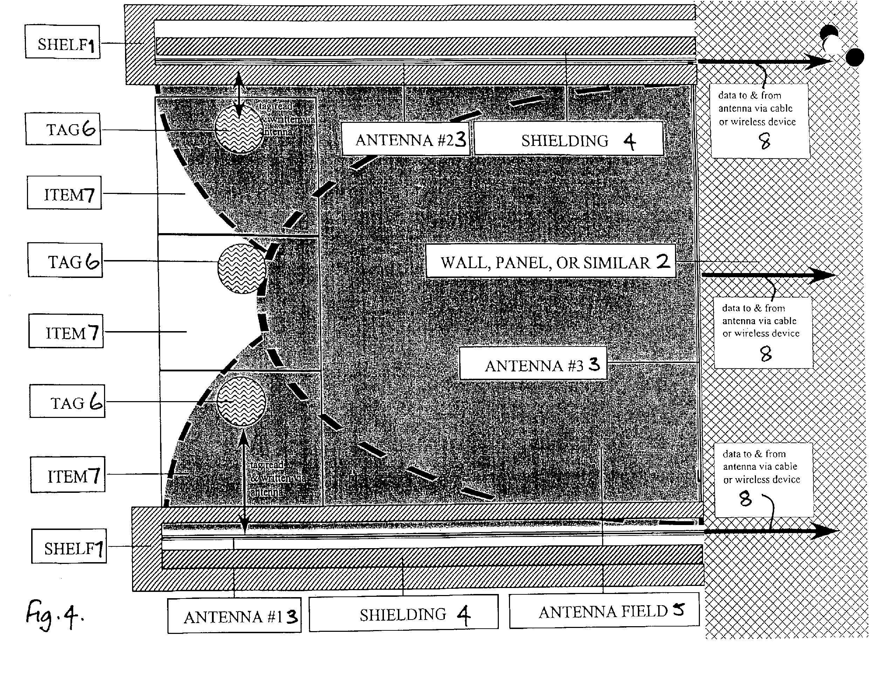

Still more complex designs, such as that shown in Fig. 4 may be provided where multiple items may be stacked on top of one another, in this case, a further antenna 3 being disposed adjacent to the wall panel 2 or the like. Each of the antennas shown in Fig. 4 is disposed to detect a different set of tags depending upon the range and interference from the items themselves. Depending upon the information supplied by each tag, the computer system to which the antennas are attached will be able to identify or at least infer the number of products on the shelf.

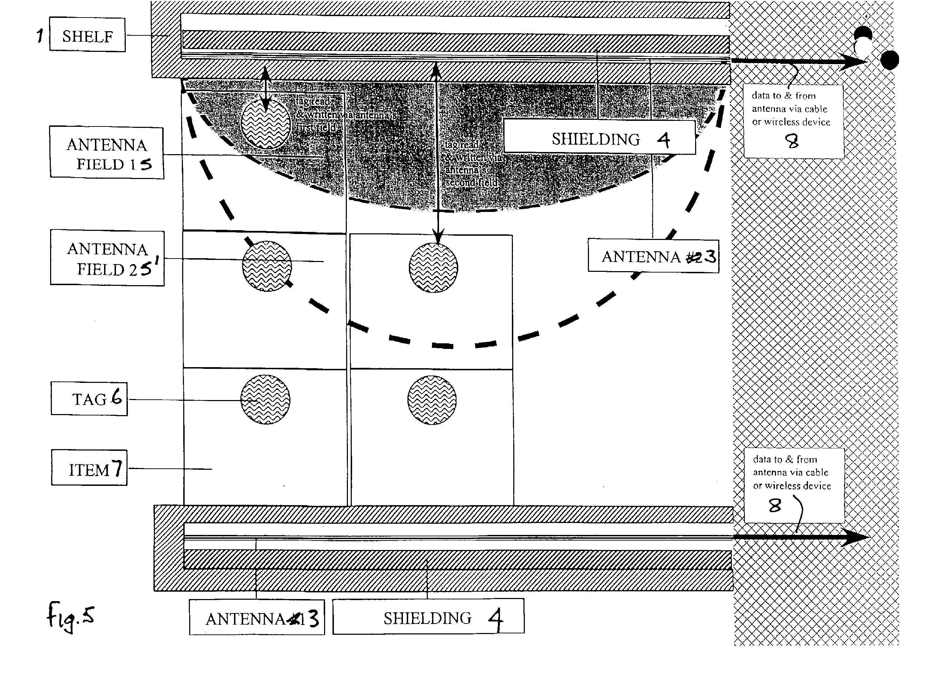

An alternative approach indicated in Fig. 5, is the use of shelf antennas that can detect at different frequencies or different field sizes indicated by the different antenna fields 5, 5'. The system may be used in combination with a further antenna 3 located, for example, as shown, in an opposing shelf.

It will be readily apparent that a very wide number of possible configurations is available, depending upon the type of tags used, the items intended to be displayed, etc., and the present invention is not limited to any particular combination.

A system of this type is capable of providing monitoring and tracking of items in real time or close to real time with a high degree of accuracy and precision without the need for manual intervention. This overcomes the currently labour-intensive shelf checking systems presently used and enables a number of problems to be overcome such as misplacement of items, failure to replenish removed of items with sufficient speed, nondetection of shelf "sweeping" by thieves, failure to reorder stolen or shrunken stock and the need to conduct laborious stock checks on a regular basis.

Additionally, the tags may be read by appropriate checkout systems also connected to the computerised inventory system, providing additional information and verification.

## Claims

1. A storage system comprising one or more supports and, associated with the supports, one or more sensors arranged to detect the presence of transponders associated with items to be stored on the supports, to read information from the transponders, and to transmit information read from the transponders to, for example, a data processing unit.

2. A storage system according to claim 1, wherein at least one sensor is arranged to receive signals from a transponder comprising an RFID tag.

3. A storage system according to claim 1, wherein at least one sensor is arranged to receive signals from a transponder comprising a multi-bit magnetic tag.

4. A storage system according to any of claims 1 to 3, wherein one or more of the supports includes an electronic character display.

5. A storage system according to any of the preceding claims, wherein the supports comprise shelves.

6. An inventory control system including a storage system according to any of claims 1 to 5, and a data processing unit arranged to receive information the sensor or sensors.

7. An inventory control system according to claim 6, wherein the data processing unit is a computer system programmed to maintain a database of information about individual items held on the supports for stock control purposes and the like.

8. An inventory control system according to claim 6 or claim 7, including software to analyse the level of stock of items on individual shelves and provide a signal indicative of the requirement for replenishment of the items when the number of items falls below a pre-determined threshold level.

9. A system according to any of claims 6 to 8, when dependent on claim 5, including means for passing information to a shelf display so as to display the prices of shelved items and/or other information, enabling price changes to be indicated substantially instantaneously when changes are made in the data processing unit.

10. A system according to any of claims 6 to 9, including means for checking the location and/or quantity of items at a given shelf location and providing an indication of misplaced items.

11. A system according to any of claims 6 to 10, including means for providing an indication of the removal of large numbers of items usually sold singly or in small numbers from a shelf location.
